# EUROPÄISCHE PATENTSCHRIFT

(11) **EP 2 722 572 B1**
(45) Veröffentlichungstag und Bekanntmachung des Hinweises auf die Patenterteilung: **26.04.2017**
(21) Anmeldenummer: 13187774.8
(22) Anmeldetag: 08.10.2013
(51) Int. Cl.: F16L 5/04, F16L 5/14, F16L 59/14, F24F 13/02, C04B 38/10, C04B 111/00, C04B 111/28

(54) **ROHRLEITUNGSANORDNUNG, INSBESONDERE ZUR ANWENDUNG IM BEREICH DER LUFTTECHNIK**
PIPEWORK ASSEMBLY, IN PARTICULAR FOR USE IN THE FIELD OF VENTILATION TECHNOLOGY
AGENCEMENT DE CONDUITE, NOTAMMENT POUR UNE UTILISATION DANS LE DOMAINE DES TECHNIQUES DE VENTILATION

(30) Priorität: 16.10.2012 DE 202012103968 U
(43) Veröffentlichungstag der Anmeldung: 23.04.2014
(73) Patentinhaber: PROMAT GmbH, 40878 Ratingen (DE)
(72) Erfinder: Piontkowski, Wilfried, 15936 Dahme (DE)
(74) Vertreter: Van Steenlandt, Wim August Maria

(56) Entgegenhaltungen:
- EP-A1- 2 045 227
- EP-A1- 2 343 471
- WO-A1-94/08167
- DE-C1- 19 524 563
- DE-U1- 20 120 893
- US-A1- 2002 121 778
- US-A1- 2010 071 797

## Beschreibung

Die vorliegende Erfindung betrifft eine Rohrleitungsanordnung zur Durchleitung von Gasen, insbesondere von Luft, durch ein Bauteil, insbesondere eine Wand oder eine Decke, mit einer äußeren Rohrleitung und einer inneren Rohrleitung, welche in der äußeren Rohrleitung mit dieser einen Zwischenraum bildend angeordnet ist, wobei der Zwischenraum mit einer Brandschutzmasse ausgefüllt ist. Eine derartige Rohrleitungsanordnung wird durch die EP 2 343 471 A1 offenbart.

Rohrleitungen zum Einsatz in der Lufttechnik, insbesondere als Lüftungsleitungen, sind bekannt. Derartige Rohrleitungen sind aus Blech hergestellt und weisen einen runden oder einen viereckigen Querschnitt auf.

Solche aus Blech gefertigten Rohrleitungen haben den Nachteil, dass sie keine guten brandschutztechnischen Eigenschaften aufweisen. Im Brandfall kann dies gravierende Folgen haben, da beispielsweise Brandabschnitte innerhalb eines Gebäudes nicht gehalten werden können. Bei dem Übergang eines Brandes von einem Brandabschnitt A in einen Brandabschnitt B entsteht auf der Brandseite des Rohrleitungsdurchtritts eine sehr hohe Temperatur, die zur Folge hat, dass sich die Rohrleitung massiv verformt. Das Feuer kann sodann durch die offene Wanddurchführung von einem Brandabschnitt zum nächsten übergreifen.

Lüftungsleitungen werden zum Belüften von einzelnen Abschnitten in Gebäuden mit Überdruck betrieben. Ferner kann eine Lüftungsleitung zum Atmosphären- oder Rauchabzug auch mit Unterdruck betrieben werden. Verformt sich im Brandfall eine Leitung, kann der Rauchabzug nicht mehr gewährleistet werden. Folglich eignen sich solche Rohrleitungen nicht für dieses Einsatzgebiet.

Um den beschriebenen Nachteilen zu begegnen, ist es bekannt, eine im Querschnitt viereckige Rohrleitung zu verwenden, die aus nicht brennbaren und hitzebeständigen Brandschutzplatten besteht. Solche Brandschutzplatten können sich somit im Brandfall nicht verformen, können aber in Abhängigkeit vom verwendeten Material aufgrund der Strömungsgeschwindigkeit der durchgeleiteten Gase einem Staubabbrieb unterliegen. Somit können sich kleinste Materialteile von solchen Brandschutzplatten lösen und in der Lüftungsleitung verteilen. In den zu belüftenden Räumen schlagen sich dann diese Materialteile in Form von Staub nieder, so dass ein hygienischer Betrieb nicht gewährleistet ist. Ferner weisen manche Platten schlechte Schallschutzeigenschaften auf. Dies stellt eine wesentliche Anforderung im Bereich der Lufttechnik beim Einsatz in Gebäuden dar, da sich ansonsten Körperschall leicht im Gebäude ausbreiten kann.

Eine weitere aus dem Stand der Technik bekannte Vorgehensweise zur nachträglichen Gewährleistung von Brandschutz besteht darin, vorhandene meist aus Blech bestehende Rohrleitungen mit nicht brennbarer Mineralwolle oder Brandschutzplatten zu bekleiden. Dazu werden bei der Lösung mit Mineralwolle auf den vorhandenen Rohrleitungen Schweißstifte angebracht, so dass die Mineralwolle auf diesen verankert werden kann. Nachteilig an dieser Lösung ist zum einen das schlechte ästhetische Erscheinungsbild, insbesondere bei Lüftungsleitungen, die sich im sichtbaren Bereich eines Gebäudes befinden, zum anderen besteht weiterhin das Problem des mangelnden Schallschutzes. Insbesondere das Geräusch der durch die Lüftungsleitung strömenden Luft ist bedingt durch mangelnde Schallisolierung als Nachteil hervorzuheben.

Aus der US 2010/0071797 A1 ist eine Rohrleitungsanordnung mit einem Außen- und einem Innenrohr bekannt, wobei das Innenrohr einen Zwischenraum ausbildend in dem Außenrohr angeordnet ist. Das Außen- und das Innenrohr bestehen aus einem Polymer. Der Zwischenraum ist mit einem feuerwiderstehendem Material gefüllt.

Die WO 94/08167 A1 offenbart eine Lüftungsleitung mit einem Außen- und einem Innenrohr, welches in dem Außenrohr angeordnet ist und einen Zwischenraum ausbildet. Der Zwischenraum ist mit einem Isolationsmaterial ausgefüllt, welches feuerbeständig ist.

Die US 2002/0121778 A1 offenbart eine Lüftungsleitung bestehend aus einem Rohr, welches mit einem feuerisolierenden Material - vorliegend Steinwolle - umwickelt ist. Um das feuerisolierende Material an dem Rohr zu fixieren, ist es von einer Metallmanschette umschlossen.

Die DE 201 20 893 U1 betrifft eine Hauseinführkombination, welche ein Metallrohr umfasst. Das Metallrohr ist von einem aus Kunststoff bestehenden Schutzrohr umgeben, wobei zwischen den beiden Rohren ein Ringspalt ausgebildet ist, welcher wenigstens teilweise ein intumeszierendes Brandschutzmaterial aufweist.

Die DE 195 24 563 C1 offenbart eine Stoffzusammensetzung für einen anorganischen Schaumstoff.
Der Erfindung liegt die Aufgabe zugrunde, eine Rohrleitung zur Anwendung insbesondere im Bereich der Lufttechnik zu schaffen, die sich im Brandfall nicht verformt und modernsten Brandschutzvorschriften genügt. Zudem soll die Rohrleitung hohen Schallschutzanforderungen genügen, einen hygienischen Betrieb beim Einsatz als Lüftungsleitung gewährleisten und eine ansehnliche Optik besitzen. Darüber hinaus soll die Rohrleitungsanordnung chemisch und/oder mechanisch leicht reinigbar sein. Schließlich soll die Rohrleitung mechanisch stabil und dauerhaft beständig sein.

Diese Aufgabe wird gelöst durch eine Rohrleitungsanordnung nach Anspruch 1.

Durch die erfindungsgemäße Ausgestaltung, wonach die Zusammensetzung mit Wasser vermischt in dem Zwischenraum der Rohrleitungsanordnung eingefüllt und unter Ausbildung eines Brandschutzschaums ausgehärtet ist, kann das Aufschäumen zu Brandschutzzwecken direkt vor Ort, beispielsweise auf einer Baustelle, vorgenommen werden. Weiterhin presst sich der Brandschutzschaum auch in schwer zugängliche Stellen hinein. Dadurch kann der Kälteträger leicht in die erfindungsgemäße Rohrleitungsanordnung eingebracht werden. Die Füllung des Zwischenraums in der Rohrleitungsanordnung kann ähnlich einem Ausschäumen erfolgen. Es entsteht in der Folge eine sehr formstabile Anordnung, da eine lückenlose Befüllung realisierbar ist.

Der Erfindung liegt die Erkenntnis zugrunde, dass der mit einer erfindungsgemäßen Brandschutzmasse ausgefüllte Zwischenraum der Rohrleitungsanordnung vorteilhafte Eigenschaften bzgl. Brand- und Schallschutz aufweist. Die Brandschutzmasse ist thermisch isolierend, so dass durch die im Brandfall entstehenden hohen Temperaturen eine Verformung der Rohrleitungsanordnung verhindert wird. Es resultiert eine hohe Temperaturbeständigkeit sowie eine sehr stabile Anordnung, die zusätzlich hervorragend dazu geeignet ist, die Übertragung störender Geräusche, wie beispielsweise Körperschall, zu unterbinden.

Eine weitere Erkenntnis ist, dass ein aufgrund der leichten Brandschutzmasse sich ergebendes niedriges Gewicht der Rohrleitungsanordung den Einsatz der erfindungsgemäßen Rohrleitungsanordnung an schwer zugänglichen Stellen ermöglicht.

Des Weiteren hat sich herausgestellt, dass der Querschnitt einer Rohrleitung, insbesondere im Bereich der Lufttechnik, vorteilhafterweise kreisförmig ausgestaltet ist. Dies hat insbesondere hinsichtlich der Strömungseigenschaften Vorteile. Es liegt nur ein geringerer Strömungswiderstand vor, was sich positiv auf die Geräuschunterdrückung bezüglich des Schallschutzes auswirkt. Eine weitere Folge des geringeren Strömungswiderstands je nach verwendetem Material ist, dass der Staubabrieb, dem die innere Wandung der Rohrleitung bei der Durchleitung von Gasen, insbesondere von Luft, unterliegt, minimiert wird.

Ferner weist die erfindungsgemäße Rohrleitungsanordnung im Inneren eine glatte Oberfläche auf. Dadurch wird ebenfalls die Reibung vorteilhafterweise weiter optimiert. Darüber hinaus werden durch Reibung bedingte Energieverluste minimiert.

In einer Ausgestaltung der Erfindung weist die Brandschutzmasse zumindest teilweise ein Flammschutzmittel auf, um die Brandschutzeigenschaften zu verbessern.

Erfindungsgemäß enthält die Brandschutzmasse ein Kältemittel und/oder ein im Brandfall Kälte erzeugendes Kühlmittel. Es können gute Brandschutzeigenschaften erzielt werden, da durch das Ausfüllen des Zwischenraums der Rohrleitungsanordnung mit einem Kältemittel und/oder einem im Brandfall Kälte erzeugenden Kühlmittel die thermische Isolationswirkung verbessert wird. Die Temperaturbeständigkeit erhöht sich und in der Folge kann auf einer geringen Strecke (Dicke des mit der Brandschutzmasse ausgefüllten Zwischenraumes) ein hoher Temperaturgradient aufrechterhalten werden.

Erfindungsgemäß ist vorgesehen, dass die Brandschutzmasse ein anorganischer Brandschutzschaum ist, der hergestellt ist aus a) einer hydraulisch abbindenden Zusammensetzung, die bezogen auf ihre Trockenmischung 30 bis 95 Gew.-% wenigstens eines hydraulischen Bindemittels, eine Schäumungskomponente sowie einen Schaumstabilisator aufweist und das hydraulische Bindemittels ein pH-neutrales oder alkalisches Bindemittel ist, welches Schnellzement enthält, wobei als Schäumungskomponente Wasserstoffperoxid und Braunstein eingesetzt werden und b) Wasser. Hierdurch ist die Dichte des Schaums über die Wahl der Zusammensetzung der Kombinationen der Bestandteile Schnellzement, Wasserstoffperoxid und Braunstein einstellbar. Eine derartige Zusammensetzung wird durch die EP 2 045 227 A1 offenbart.

Erfindungsgemäß ist vorgesehen, dass die Zusammensetzung mit Wasser vermischt in dem Zwischenraum der Rohrleitungsanordnung eingefüllt und unter Ausbildung eines Brandschutzschaums ausgehärtet ist. Dadurch kann das Aufschäumen zu Brandschutzzwecken direkt vor Ort, beispielsweise auf einer Baustelle, vorgenommen werden. Weiterhin presst sich der Brandschutzschaum auch in schwer zugängliche Stellen hinein. Dadurch kann der Kälteträger leicht in die erfindungsgemäße Rohrleitungsanordnung eingebracht werden. Die Füllung des Zwischenraums in der Rohrleitungsanordnung kann ähnlich einem Ausschäumen erfolgen. Es entsteht in der Folge eine sehr formstabile Anordnung, da eine lückenlose Befüllung realisierbar ist.

Eine vorteilhafte Ausführung sieht vor, dass der Brandschutzschaum im abgebundenen, trockenen Zustand eine Dichte von 80 kg/m³ bis 1000 kg/m³, insbesondere 100 kg/m³ bis 850 kg/m³, aufweist. Der trockene Zustand des Brandschutzschaums ist dann erreicht, wenn dieser nach dem Abbinden und Verdunsten des Restwassers nahezu Gewichtskonstanz erreicht hat. Die Trocknung kann bei Umgebungstemperatur erfolgen, oder bei erhöhter Temperatur, beispielsweise bei 40° C.

Eine weitere Ausführung sieht vor, dass der Brandschutzschaum die Brandschutzvorschriften gemäß DIN 4102 und/oder entsprechenden europäischen Normen in der Art erfüllt, dass eine aus dem Brandschutzschaum hergestellte Rohrleitungsanordnung bei einer Brandschutzprüfung nach der Einheitstemperaturkurve (ETK) nach DIN 4102 das Versagenskriterium einer Temperaturerhöhung von 180°C auf der Kaltseite frühestens nach einer Prüfdauer von 120 Minuten erreicht, bevorzugt erst nach einer Prüfdauer von mehr als 180 Minuten. So ist es möglich, bei verhältnismäßig geringen Dicken des Brandschutzschaums eine Feuerbeständigkeit zu erreichen.

Eine vorteilhafte Ausgestaltung der Erfindung ist gekennzeichnet durch einen kreisförmigen Querschnitt der inneren bzw. der äußeren Rohrleitung. Ein kreisförmiger Querschnitt bei der Anwendung im Bereich der Lufttechnik bietet viele vorteilhafte Eigenschaften. Zum einen ist die Summe an Strömungswiderständen der Gase, insbesondere von Luft, optimal gering gegenüber beispielsweise eckigen Formen. Dies trägt dazu bei, die energetischen Aspekte der Rohrleitungsanordnung zu verbessern. Ein an einer Lüftungsleitung anschließbarer Lufttauscher, der Gase durch die Rohrleitungsanordnung hindurch führt, benötigt weniger Energie, um den Austausch mittels eines Ventilators durchzuführen. Ein kreisförmiger Querschnitt ist nicht nur optimal für gerade verlaufende Kanäle, sondern auch für Bögen- oder Etagenformen. Die Zetawerte sind verhältnismäßig klein. Ferner bietet ein kreisförmiger Querschnitt ausgezeichnete Eigenschaften bezüglich des Schallschutzes. Der Hintergrund hierbei ist, dass kreisförmige Querschnitte, im Gegensatz zu beispielsweise viereckigen Querschnitten, wesentlich schwieriger in Schwingung zu versetzen sind. Die Folge hiervon ist, dass sich insbesondere Körperschall in einem Gebäude weniger stark ausbreiten kann.

Eine weitere Ausgestaltung der Erfindung sieht vor, dass die innere und/oder die äußere Rohrleitung aus einem nicht brennbaren Material, vorzugsweise Blech, besteht. Durch die Verwendung von Blech liegt an der inneren Wandung der inneren Rohrleitung der Rohrleitungsanordnung eine glatte Oberfläche vor. Dadurch können Strömungsverluste der durchströmenden Luft minimiert werden. Unter energetischen Aspekten ist dies wünschenswert. Ein weiterer Vorteil bei der Verwendung von Blech besteht darin, dass eine besonders stabile Konstruktion entsteht. Durch die Verbundwirkung zwischen der aus Blech bestehenden inneren und äußeren Rohrleitung mit der in dem Zwischenraum der Rohrleitung angeordneten Brandschutzmasse entsteht eine besonders formstabile Verbindung. Dies wirkt sich wiederrum positiv auf die Brand- und Schallschutzeigenschaften der Rohrleitungsanordnung aus.

Die erfindungsgemäße Rohrleitungsanordnung ist in einer weiteren Ausgestaltung dadurch gekennzeichnet, dass die Wandstärke der inneren Rohrleitung und/oder der äußeren Rohrleitung etwa 0,01 mm bis 10 mm, vorzugsweise etwa 0,5 mm bis etwa 5 mm, besonders bevorzugt etwa 0,8 mm bis etwa 3 mm oder etwa 1 mm bis etwa 3 mm beträgt. Dies gewährleistet eine ausreichende Stabilität, um einerseits die Brandschutzmasse aufnehmen zu können und andererseits ein ideales Verhältnis zwischen Bautiefe und Materialeinsatz gewährleisten zu können. Es können aber auch beliebige Wandstärken, um die Rohrleitungsanordnung an verschiedene Anwendungsbereiche bzw. Einsatzorte anpassen zu können, realisiert werden. Durch die Variation der Dicke der den Zwischenraum der Rohrleitungsanordnung ausfüllenden Brandschutzmasse kann insbesondere die Feuerwiderstandsdauer entsprechend der Feuerwiderstandsklassen 30, 60, 90, 120 und 180 angepasst werden. Dabei spricht man beim Widerstand eines Bauteils gegenüber einem Feuer von mindestens 30 bzw. 60 Minuten von feuerhemmend und bei mindestens 90 bzw. 120 Minuten von feuerbeständig.

In einer bevorzugten Ausgestaltung der erfindungsgemäßen Rohrleitungsanordnung sind die innere Rohrleitung und die äußere Rohrleitung konzentrisch zueinander angeordnet. Daraus resultiert, dass der Zwischenspalt ringspaltförmig ausgebildet ist. Somit weist die Brandschutzmasse eine über den gesamten Umfang der Rohrleitungsanordnung konstante Stärke auf. Die Brandschutzeigenschaften sind hierdurch über die gesamte Länge und den Umfang der Rohrleitungsanordnung homogen. Vorteilhafterweise weist der ringspaltförmige Zwischenraum eine Breite in einem Bereich von etwa 1 cm bis etwa 10 cm, vorzugsweise in einem Bereich von etwa 2 cm bis 5 cm auf. Die Dicke des Zwischenraums ist den Einbaugegebenheiten entsprechend anpassbar, so dass die vorteilhaften Eigenschaften der Rohrleitungsanordnung an die äußeren Rahmenbedingungen des Einsatzortes angepasst werden können.

Im Rahmen von Brandversuchen mit erfindungsgemäß ausgebildeten Lüftungsleitungen mit einem kreisförmigen Querschnitt wurde empirisch festgestellt, dass erfindungsgemäße Rohrleitungsanordnungen den Normen und Richtlinien für den bautechnischen Brandschutz, insbesondere nach DIN 4102 bzw. DIN EN 13501, genügen und ferner die Anforderungen der Feuerwiderstands- bzw. Brandwiderstandsklassen insbesondere im Lüftungsbereich erfüllen. Der Feuerwiderstand bzw. Brandwiderstand eines Bauteils steht dabei für die Dauer, während der ein Bauteil im Brandfall seine Funktion behält. Dabei muss das Bauteil die Ausbreitung von Brand- und/oder Rauch verhindern, das heißt einen sicheren Raumabschluss bereitstellen und die Temperaturkriterien der jeweiligen Norm erfüllen. Im Rahmen der Brandversuche erfüllte eine erfindungsgemäße Lüftungsleitung, mit einer aus etwa 1 mm starkem Stahlblech gefertigten inneren Rohrleitung mit einem inneren Durchmesser von etwa 630 mm, einer aus etwa 1 mm Stahlblech gefertigten äußeren Rohrleitung mit einem inneren Durchmesser von etwa 710 mm, und einem mit einer Brandschutzmasse ausgefüllten Zwischenraum zwischen der inneren Rohrleitung und der äußeren Rohrleitung, ohne Probleme die Anforderungen gemäß Feuerwiderstandklasse L90 bzw. L120.

Es wird vermutet, dass bei einer erfindungsgemäßen Rohrleitungsanordnung die Brandschutzeigenschaften aufgrund der im Zwischenraum zwischen der inneren Rohrleitung und der äußeren Rohrleitung eingefassten bzw. eingesperrten Brandschutzmasse verbessert sind und eine höhere thermische Isolationswirkung erzielt wird, da das in der Brandschutzmasse enthaltene Wasser, welches in der Brandschutzmasse mineralisch gebundene ist und im Brandfall Wasserdampf bildet, nicht entweichen kann.

Eine weitere Ausgestaltung der Erfindung ist dadurch gekennzeichnet, dass wenigstens zwei innere Rohrleitungen in der äußeren Rohrleitung der Rohrleitungsanordnung angeordnet sind. So ist es möglich, beispielsweise eine Zuluft- und Abluftleitung in einer Rohrleitungsanordnung zu verwirklichen, welche jeweils den vorteilhaften Brandschutz- und Schallschutzeigenschaften der Erfindung unterliegen.

Weitere Einzelheiten, Merkmale und Vorteile der Erfindung werden nachfolgend anhand der in den Figuren der Zeichnung dargestellten Ausführungsbeispiele näher erläutert. Dabei zeigt:
- Fig. 1: in einer schematischen Prinzipdarstellung eine geschnittene Längsansicht einer Rohrleitung gemäß dem bisherigen Stand der Technik im Anwendungsbeispiel einer Wanddurchführung;
- Fig. 2: in einer schematischen Prinzipdarstellung eine geschnittene Längsansicht eines Ausführungsbeispiels einer erfindungsgemäßen Rohrleitungsanordnung im Anwendungsbereich einer Wanddurchführung;
- Fig. 3: in einer Querschnittansicht ein Ausführungsbeispiel einer erfindungsgemäßen Rohrleitungsanordnung; und
- Fig. 4: in einer Querschnittansicht ein weiteres Ausführungsbeispiel einer erfindungsgemäßen Rohrleitungsanordnung.

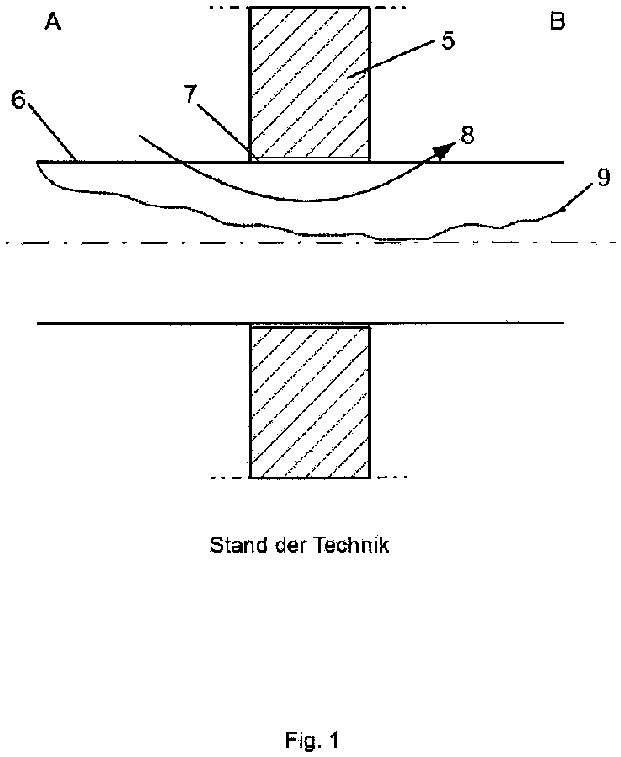

Fig. 1 zeigt eine Lüftungsleitung 6 gemäß dem Stand der Technik. Die Lüftungsleitung 6 ist dabei durch eine Wand 5 geführt. Konstruktionsbedingt kann diese Lüftungsleitung 6 mit einem Füllstoff 7, beispielsweise Mörtel, in der Wand fixiert sein. Im Brandfall bricht beispielsweise ein Feuer in einem Brandabschnitt A - in der Zeichnung mit A bezeichnet - aus. Aufgrund der hohen Temperaturen verformt sich die Lüftungsleitung 6. Die Verformung ist in Fig. 1 durch die gestrichelte Linie 9 symbolisch dargestellt. Es entsteht eine Öffnung in der Wand 5, durch die sich das Feuer in den nächsten Brandanschnitt B - in der Zeichnung mit B bezeichnet - ausbreiten kann. Die Ausbreitungsrichtung des Feuers ist in der Zeichnung durch den Pfeil 8 dargestellt. Der Querschnitt der Lüftungsleitung 6 wird nicht gehalten, wenn sich die Lüftungsleitung 6 aufgrund der hohen Temperatur durch ein Feuer verformt. Die Funktionalität der Lüftungsleitung wird massiv beeinträchtigt. Dieser Fall liegt besonders immer dann vor, wenn Lüftungsleitungen nicht nur mit Überdruck zum Belüften von Abschnitten in Gebäuden verwendet werden, sondern wenn diese mit Unterdruck betrieben werden, um einen Atmosphären- oder Rauchabzug im Brandfall zu gewährleisten.

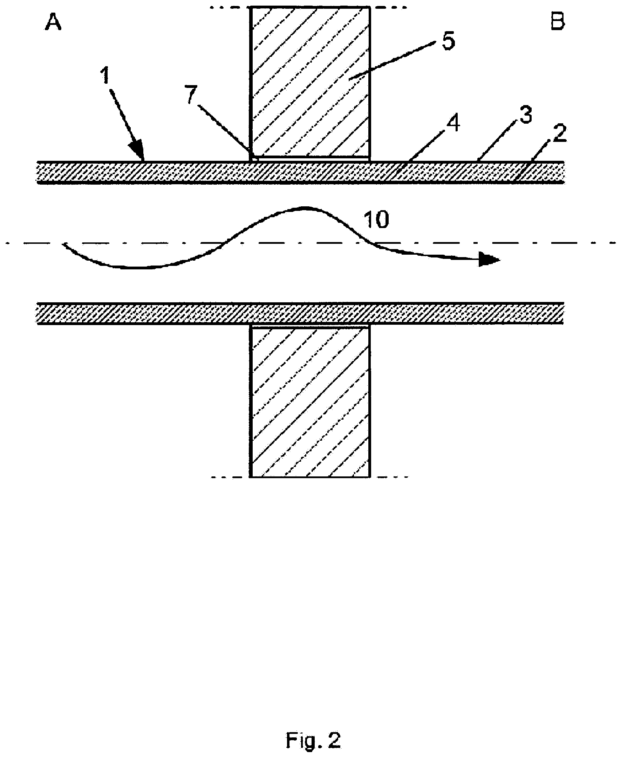

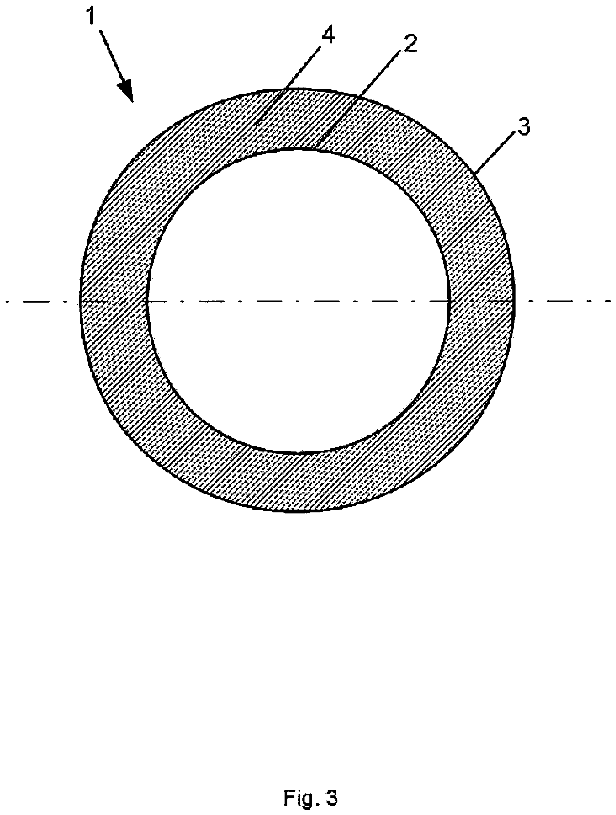

Fig. 2 und Fig. 3 zeigen ein Ausführungsbeispiel einer erfindungsgemäßen Rohrleitungsanordnung 1, zur Anwendung im Bereich der Lufttechnik, wobei die Rohrleitungsanordnung 1 durch eine Wand 5 durchgeleitet ist. Die Rohrleitungsanordnung 1 weist eine innere Rohrleitung 2 und eine äußere Rohrleitung 3 auf, wobei die innere Rohrleitung 2 in der äußeren Rohrleitung 3 einen Zwischenraum 4 bildend angeordnet ist und der Zwischenraum 4 mit einer Brandschutzmasse ausgefüllt ist. Die Brandschutzmasse ist symbolisch durch die Schraffur dargestellt. Es handelt sich um ein einzufüllendes Material, dessen chemische Zusammensetzung aus wenigstens einem Bindemittel, einer Schäumungskomponente sowie einem Schaumstabilisator besteht, wobei das hydraulische Bindemittel ein pH-neutrales oder alkalisches Bindemittel ist. Die Zusammensetzung wird mit Wasser vermischt und in dem Zwischenraum 4 der Rohrleitungsanordnung 1 eingefüllt. Unter Ausbildung eines Brandschutzschaumes erfolgt eine Aufschäumung der Zusammensetzung, welche sich in dem gesamten Zwischenraum 4 der Rohrleitungsanordnung 1 ausfüllend ausbreitet.

Im Brandfall entsteht gemäß der oben getroffenen Annahme ein Feuer in dem Brandabschnitt A. Aufgrund der Isolier- und Brandschutzeigenschaften der Brandschutzmasse bleibt die Rohrleitungsanordnung 1 formstabil. Das Feuer kann sich dadurch nicht brandbereichsübergreifend ausbreiten. Die Rohrleitungsanordnung 1 bleibt funktionsfähig. Dieses Funktionsprinzip wird schematisch durch die Luftströmung 10 dargestellt, die durch die intakte Rohrleitungsanordnung 1 strömt.

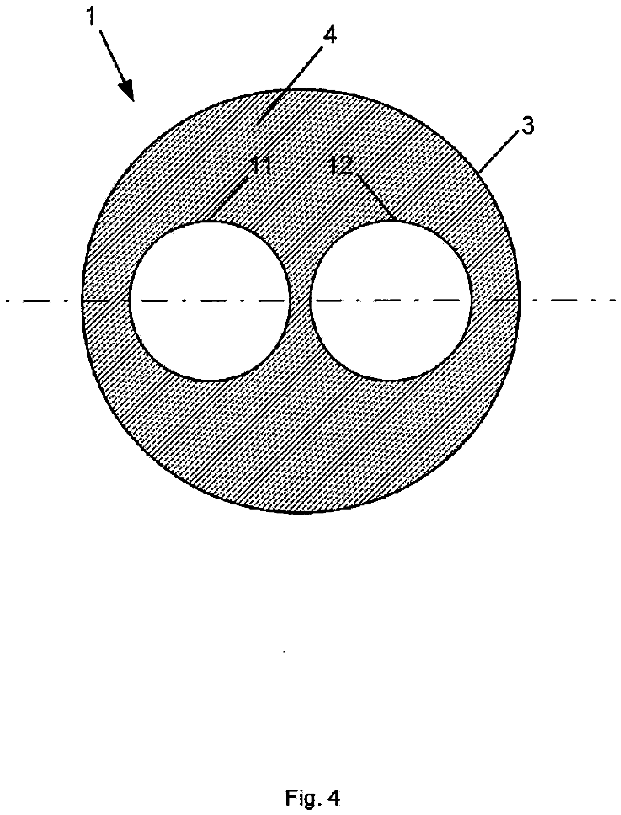

Fig. 4 zeigt eine Querschnittszeichnung einer weiteren Ausgestaltung einer erfindungsgemäßen Rohrleitungsanordnung 1. Bei dieser Variante weist die Rohrleitungsanordnung 1 zwei innere Rohrleitungen 11 und 12 auf. Diese sind parallel zueinander verlaufend und im Verbund zentriert in der äußeren Rohrleitung 3 angeordnet. Der sich zwischen den inneren Rohrleitungen 11 und 12 und der äußeren Rohrleitung 3 ergebene Zwischenraum 4 ist mit einer Brandschutzmasse ausgefüllt. Die Brandschutzmasse ist symbolisch durch die Schraffur dargestellt. Auch hier wird als Brandschutzmasse eine chemische Zusammensetzung bestehend aus wenigstens einem Bindemittel, einer Schäumungskomponente sowie einem Schaumstabilisator verwendet, wobei das hydraulische Bindemittel ein pH-neutrales oder alkalisches Bindemittel ist. Bei einer Vermischung mit Wasser entsteht im finalen ausgehärteten Zustand ein Brandschutzschaum.

Durch die Anordnung von zwei inneren Rohrleitungen 11 und 12 in der Rohrleitungsanordnung 1 ist es beispielsweise möglich, eine Zuluft- und eine Abluftleitung in der äußeren Rohrleitung 3 zu integrieren.

Es sind auch Ausgestaltungen denkbar, bei denen drei oder mehr innere Rohrleitungen in der äußeren Rohrleitung 3 der Rohrleitungsanordnung 1 angeordnet sind.

Die erfindungsgemäße Rohrleitungsanordnung weist die nachfolgenden Vorteile auf:
Die Rohrleitungsanordnung weist hervorragende Brandschutzeigenschaften auf. Sie ist auf unterschiedliche Feuerschutzklassen anpassbar. Im Brandfall wird eine Verformung der Rohrleitungsanordnung verhindert und ein Feuer kann nicht von einem Brandabschnitt zu einem nächsten übergreifen. Die Funktionalität der Rohrleitungsanordnung wird jederzeit gewährleistet.

Der Strömungswiderstand von durchströmenden Gasen, insbesondere von Luft, durch die Rohrleitungsanordnung ist optimiert und minimiert. Damit genügt die Rohrleitungsanordnung hohen hygienischen Anforderungen, da insbesondere der Abrieb von Staub vermieden wird. Ferner werden durch die geringe Reibung der durchströmenden Gase die Übertragung von insbesondere Körperschall sowie Energieverluste minimiert.

Weiterhin ist die Rohrleitungsanordnung mechanisch formstabil. Dies wird insbesondere durch den kreisförmigen Querschnitt der Rohrleitungsanordnung, wie auch durch das Ausfüllen des Zwischenraums zwischen der inneren und der äußeren Rohrleitung mit einer Brandschutzmasse realisiert. Unter bestimmten Einbaugegebenheiten kann auch die Verwendung von im Querschnitt ovalen äußeren und/oder inneren Rohrleitungen vorteilhaft sein. Gleiches gilt für Rohrleitungsanordnungen mit rechteckigem Querschnitt.

Durch die verhältnismäßig geringe Dichte der Brandschutzmasse ist die Rohrleitungsanordnung leicht und dadurch einfach handhabbar.

Gegenüber den aus dem Stand der Technik bekannten Lösungen stellt die erfindungsgemäße Rohrleitungsanordnung eine optisch ästhetische Lösung bereit.

Mit der erfindungsgemäßen Rohrleitungsanordnung ist eine Anwendung an schwer zugänglichen Anwendungsorten möglich. Ferner kann das Ausfüllen des Zwischenraums der Rohrleitungsanordnung vor Ort, beispielsweise auf einer Baustelle, erfolgen, was die Montage erheblich erleichtert. Darüber hinaus wird durch das Aufschäumen die Brandschutzmasse in sämtliche Hohlräume einer Rohrleitungsanordnung gepresst, so dass eine vollständige Füllung der Rohrleitungsanordnung gewährleistet werden kann.

Die in den Figuren der Zeichnung dargestellten Ausführungsbeispiele der Erfindung als auch die im Zusammenhang mit diesen erläuterten Ausführungsbeispiele der Erfindung dienen lediglich der Erläuterung der Erfindung und sind für diese nicht beschränkend.

### Bezugszeichenliste:

- 1: Rohrleitungsanordnung
- 2: innere Rohrleitung
- 3: äußere Rohrleitung
- 4: Zwischenraum mit Kälteträger ausgefüllt
- 5: Wand
- 6: Lüftungsleitung (Stand der Technik)
- 7: konstruktionsbedingter Füllstoff
- 8: Feuerausbreitungsrichtung
- 9: Rohrverformung
- 10: Luftströmung
- 11: innere Rohrleitung A
- 12: innere Rohrleitung B

## Patentansprüche

1. Rohrleitungsanordnung zur Durchleitung von Gasen, insbesondere von Luft, durch ein Bauteil, insbesondere eine Wand (5) und/oder eine Decke, mit einer äußeren Rohrleitung (3)
und
einer inneren Rohrleitung (2),
welche in der äußeren Rohrleitung (3) mit dieser einen Zwischenraum (4) bildend angeordnet ist, wobei
der Zwischenraum (4) mit einer Brandschutzmasse ausgefüllt ist,
**dadurch gekennzeichnet, dass**
die Brandschutzmasse ein anorganischer Brandschutzschaum ist, der hergestellt ist aus
a) einer hydraulischen abbindenden Zusammensetzung, die bezogen auf ihre Trockenmischung 30 bis 95 Gew.-% wenigstens eines hydraulischen Bindemittels, eine Schäumungskomponente sowie einen Schaumstabilisator aufweist und das hydraulische Bindemittel ein pH-neutrales oder alkalisches Bindemittel ist, welches Schnellzement enthält, wobei als Schäumungskomponente Wasserstoffperoxid und Braunstein eingesetzt werden,
und
b) Wasser,
wobei
die Brandschutzmasse ein Kältemittel und/oder ein im Brandfall Kühlung erzeugendes Mittel enthält,
und
die Zusammensetzung mit Wasser vermischt, in den Zwischenraum (4) eingefüllt und unter Ausbildung eines Brandschutzschaums ausgehärtet ist,
derart, dass das in der Brandschutzmasse enthaltene Wasser, welches in der Brandschutzmasse mineralisch gebunden ist und im Brandfall Wasserdampf bildet, nicht entweichen kann.

2. Rohrleitungsanordnung nach Anspruch 1,
**dadurch gekennzeichnet, dass**
die Brandschutzmasse zumindest teilweise ein Flammschutzmittel aufweist.

3. Rohrleitungsanordnung nach Anspruch 1 oder Anspruch 2,
**dadurch gekennzeichnet, dass**
der Brandschutzschaum im abgebundenen, trockenen Zustand eine Dichte von 80 kg/m³ bis 1000 kg/m³, insbesondere 100 kg/m³ bis 850 kg/m³, aufweist.

4. Rohrleitungsanordnung nach einem der Ansprüche 1 bis 3,
**dadurch gekennzeichnet, dass**
die äußere und/oder innere Rohrleitung im Querschnitt kreisförmig oder oval ausgebildet ist.

5. Rohrleitungsanordnung nach einem der Ansprüche 1 bis 4,
**dadurch gekennzeichnet, dass**
die innere und äußere Rohrleitung (2), (3) aus einem nicht brennbaren Material, vorzugsweise Blech, bestehen.

6. Rohrleitungsanordnung nach einem der Ansprüche 1 bis 5,
**dadurch gekennzeichnet, dass**
die innere Rohrleitung (2) und die äußere Rohrleitung (3) konzentrisch zueinander angeordnet sind.

7. Rohrleitungsanordnung nach einem der Ansprüche 1 bis 6,
**dadurch gekennzeichnet, dass**
die Wandstärke der inneren Rohrleitung (2) etwa 0,01 mm bis etwa 10 mm, vorzugsweise etwa 0,8 mm bis etwa 3 mm beträgt.

8. Rohrleitungsanordnung nach Anspruch 6 oder Anspruch 7,
**dadurch gekennzeichnet, dass**
der Zwischenraum (4) ringspaltförmig ausgebildet ist.

9. Rohrleitungsanordnung nach Anspruch 8,
**dadurch gekennzeichnet, dass**
der ringspaltförmige Zwischenraum (4) eine Breite in einem Bereich von etwa 1 cm bis etwa 10 cm, vorzugsweise von etwa 2 cm bis etwa 5 cm, aufweist.

10. Rohrleitungsanordnung nach einem der Ansprüche 1 bis 9,
**dadurch gekennzeichnet, dass**
wenigstens zwei innere Rohrleitungen (11, 12) in der äußeren Rohrleitung (3) angeordnet sind.

11. Rohrleitungsanordnung nach einem der Ansprüche 1 bis 10,
**dadurch gekennzeichnet, dass**
die äußere Rohrleitung (3) aus einem nicht brennbaren Material, vorzugsweise Blech, besteht.

12. Rohrleitungsanordnung nach einem der Ansprüche 1 bis 11,
**dadurch gekennzeichnet, dass**
die Wandstärke der äußeren Rohrleitung (3) etwa 0,01 mm bis etwa 10 mm, vorzugsweise etwa 0,8 mm bis etwa 3 mm beträgt.

## Claims

1. A pipe arrangement for conducting gases, in particular air, through a building component, in particular a wall (5) and/or a ceiling,
comprising an outer pipe (3)
and
an inner pipe (2),
which is arranged within the outer pipe (3) while forming an interspace (4) with this one, wherein
the interspace (4) is filled with a fire protection mass,
**characterized in that**
the fire protection mass is an inorganic fire protection foam which is produced from
a) a hydraulic setting composition which, referred to the dried mixture thereof, comprises 30 to 95 % by mass of at least one hydraulic binding agent, a foaming component as well as a foam stabilizer, and the hydraulic binding agent is a neutral pH or alkaline binding agent which contains quick cement, wherein hydrogen peroxide and manganese dioxide are used as foaming component, and
b) water,
wherein the fire protection mass contains a coolant and/or a medium which produces cooling in case of fire,
and
the composition is mixed with water, filled into the interspace (4) and hardened while forming a fire protection foam,
such that the water contained in the fire protection mass, which water is mineral-bound in the fire protection mass and forms water vapour in case of fire, cannot escape.

2. A pipe arrangement according to claim 1,
**characterized in that**
the fire protection mass comprises, at least partially, a flame retardant.

3. A pipe arrangement according to claim 1 or claim 2,
**characterized in that**
in the set, dry state the fire protection foam comprises a density comprised between 80 kg/m³ and 1000 kg/m³, in particular between 100 kg/m³ and 850 kg/m³.

4. A pipe arrangement according to one of the claims 1 to 3,
**characterized in that**
the cross section of the outer and/or inner pipe is circular or oval.

5. A pipe arrangement according to one of the claims 1 to 4,
**characterized in that**
the inner and/or outer pipe (2), (3) are made of a non-flammable material, preferably sheet metal.

6. A pipe arrangement according to one of the claims 1 to 5,
**characterized in that**
the inner pipe (2) and the outer pipe (3) are arranged concentrically with respect to each other,

7. A pipe arrangement according to one of the claims 1 to 6,
**characterized in that**
the wall thickness of the inner pipe (2) is comprised between approximately 0.01 mm and approximately 10 mm, preferably between approximately 0.8 mm and approximately 3 mm.

8. A pipe arrangement according to claim 6 or claim 7,
**characterized in that**
the interspace (4) is shaped like an annular gap.

9. A pipe arrangement according to claim 8,
**characterized in that**
the interspace (4) shaped like an annular gap comprises a width comprised between approximately 1 cm and approximately 10 cm, preferably between approximately 2 cm and approximately 5 cm.

10. A pipe arrangement according to one of the claims 1 to 9,
**characterized in that**
at least two inner pipes (11, 12) are arranged in the outer pipe (3).

11. A pipe arrangement according to one of the claims 1 to 10,
**characterized in that**
the outer pipe (3) is made of a non-flammable material, preferably sheet metal.

12. A pipe arrangement according to one of the claims 1 to 11,
**characterized in that**
the the wall thickness of the outer pipe (3) is comprised between approximately 0.01 mm and approximately 10 mm, preferably between approximately 0.8 mm and approximately 3 mm.

## Revendications

1. Assemblage de conduites pour faire traverser des gaz, notamment de l'air, à travers un élément de construction, notamment une paroi (5) et/ou un plafond, comprenant une conduite extérieure (3)
et
une conduite intérieure (2),
qui est disposée dans la conduite extérieure (3) en formant un interstice (4) avec celle-ci, dans lequel
l'interstice (4) est rempli d'une masse anti-feu,
**caractérisé en ce que**
la masse anti-feu est une mouse anti-feu inorganique, qui est fabriquée à partir
a) d'une composition à prise hydraulique, qui, relativement à son mélange sec, comprend 30 à 95 % en poids d'au moins un liant hydraulique, un composant moussant ainsi qu'un stabilisateur de mousse et le liant hydraulique est un liant à pH neutre ou alcalin, qui contient du ciment à prise rapide, du peroxyde d'hydrogène et du dioxyde de manganèse étant utilisés en tant que composant moussant, et
b) de l'eau,
dans lequel
la masse anti-feu contient un agent de refroidissement et/ou un agent produisant du refroidissement en cas d'incendie,
et
la composition est mélangée avec de l'eau, introduite dans l'interstice (4) et durcie en formant une mousse anti-feu, de sorte que l'eau contenue dans la masse anti-feu, liée par liant minéral dans la masse anti-feu et formant de la vapeur d'eau en cas d'incendie ne peut pas échapper.

2. Assemblage de conduites selon la revendication 1,
**caractérisé en ce que**
la masse anti-feu comprend au moins partiellement un retardant de flammes.

3. Assemblage de conduites selon la revendication 1 ou la revendication 2,
**caractérisé en ce que**
la mousse anti-feu comprend, dans l'état de prise et sec, une densité comprise entre 80 kg/m³ et 1000 kg/m³, notamment entre 100 kg/m³ et 850 kg/m³.

4. Assemblage de conduites selon l'une des revendications 1 à 3,
**caractérisé en ce que**
la conduite extérieure et/ou la conduite intérieure a une section transversale en forme circulaire ou ovale.

5. Assemblage de conduites selon l'une des revendications 1 à 4,
**caractérisé en ce que**
la conduite intérieure (2) et la conduite extérieure (3) sont fabriquées en un matériau incombustible, de préférence en tôle.

6. Assemblage de conduites selon l'une des revendications 1 à 5,
**caractérisé en ce que**
la conduite intérieure (2) et la conduite extérieure (3) sont disposées de manière concentrique l'une par rapport à l'autre.

7. Assemblage de conduites selon l'une des revendications 1 à 6,
**caractérisé en ce que**
l'épaisseur de paroi de la conduite intérieure (2) est comprise entre environ 0,01 mm et environ 10 mm, de préférence entre environ 0,8 mm et environ 3 mm.

8. Assemblage de conduites selon la revendication 6 ou la revendication 7,
**caractérisé en ce que**
l'interstice (4) est conçu en forme de fente annulaire.

9. Assemblage de conduites selon la revendication 8,
**caractérisé en ce que**
l'interstice (4) en forme de fente annulaire comprend une largeur comprise entre environ 1 cm et environ 10 cm, de préférence entre environ 2 cm et environ 5 cm.

10. Assemblage de conduites selon l'une des revendications 1 à 9,
**caractérisé en ce qu'**
au moins deux conduites intérieures (11, 12) sont disposées dans la conduite extérieure (3).

11. Assemblage de conduites selon l'une des revendications 1 à 10,
**caractérisé en ce que**
la conduite extérieure (3) est fabriquée en un matériau incombustible, de préférence en tôle.

12. Assemblage de conduites selon l'une des revendications 1 à 11,
**caractérisé en ce que**
l'épaisseur de paroi de la conduite extérieure (3) est comprise entre environ 0,01 mm et environ 10 mm, de préférence entre environ 0,8 mm et environ 3 mm.
